(19) Europäisches Patentamt / European Patent Office / Office européen des brevets

(11) **EP 2 831 662 B1**

## (12) EUROPÄISCHE PATENTSCHRIFT

(45) Veröffentlichungstag und Bekanntmachung des Hinweises auf die Patenterteilung:
**04.08.2021  Patentblatt 2021/31**

(21) Anmeldenummer: **13709845.5**

(22) Anmeldetag: **06.03.2013**

(51) Int Cl.:
*G02C 7/08* (2006.01)          *G02C 7/12* (2006.01)
*G02B 30/25* (2020.01)        *G02B 30/24* (2020.01)
*G02B 30/30* (2020.01)        *G02C 7/14* (2006.01)

(86) Internationale Anmeldenummer:
**PCT/EP2013/054543**

(87) Internationale Veröffentlichungsnummer:
**WO 2013/143816 (03.10.2013 Gazette 2013/40)**

(54) **VISUALISIERUNGSSYSTEM FÜR DREIDIMENSIONALE BILDER**

VISUALIZATION SYSTEM FOR THREE-DIMENSIONAL IMAGES

SYSTÈME DE VISUALISATION D'IMAGES TRIDIMENSIONNELLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2012  DE 102012205271**

(43) Veröffentlichungstag der Anmeldung:
**04.02.2015  Patentblatt 2015/06**

(73) Patentinhaber: **Carl Zeiss Vision International GmbH**
**73430 Aalen (DE)**

(72) Erfinder:
• **PACHER, Peter**
  **8700 Leoben (AT)**
• **SESSNER, Rainer**
  **91154 Roth (DE)**

(74) Vertreter: **Gauss, Nikolai et al**
**Pfiz/Gauss Patentanwälte PartmbB**
**Tübingerstraße 26**
**70178 Stuttgart (DE)**

(56) Entgegenhaltungen:
**EP-A2- 0 362 692     DE-A1- 2 742 764**
**GB-A- 2 308 677      JP-A- S58 184 118**
**JP-A- S61 261 719    US-A- 4 744 633**
**US-B1- 6 318 857**

• **None**

EP 2 831 662 B1

**Beschreibung**

Die Erfindung betrifft ein System zum stereoskopischen Visualisieren von Bildinformation. Das System hat eine Anzeigeeinrichtung, die eine Anzeigefläche für das Anzeigen von einem linken und rechten Teilbild aufweist. Das linke Teilbild stellt die Anzeigeeinrichtung einem auf die Anzeigefläche fokussierten linken Auge eines Betrachters in einer ersten Blickrichtung mit einem linken Beobachtungsstrahlengang bereit. Das rechte Teilbild wird mit der Anzeigeeinrichtung einem auf die Anzeigefläche fokussierten rechten Auge des Betrachters in einer zweiten Blickrichtung mit einem rechten Beobachtungsstrahlengang zur Anzeige gebracht. Das System enthält eine von dem linken und/oder rechten Beobachtungsstrahlengang durchsetzte Sehhilfe. Die Erfindung erstreckt sich auch auf ein Verfahren zum Visualisieren von dreidimensionalen Bildern.

Für das Erzeugen eines räumlichen Seheindrucks von Bildinformation bei einem Betrachter ist es erforderlich, dass dem linken und rechten Auge zwei Teilbilder mit einem unterschiedlichen Betrachtungswinkel zur Anzeige gebracht werden. Dies ist z. B. mit sogenannten Stereoskopen möglich. In einem Stereoskop gibt es eine Anzeigeeinrichtung für ein linkes und ein rechtes Teilbild, die räumlich voneinander getrennt sind. Ein Stereoskop hat eine als Sehhilfe wirkende Optikbaugruppe, durch die der Betrachter das linke und rechte Teilbild in einer Fokusebene betrachten kann.

Ein System zum stereoskopischen Visualisieren von Bildinformation der eingangs genannten Art ist aus der EP 0 362 692 A2 bekannt. Dort ist eine Brille für einen Betrachter beschrieben, bei der die durch ein Traggestell gehaltenen, starr miteinander verbundenen optischen Gläser zwei Prismen umfassen. Diese Prismen gewährleisten, dass wenn der Betrachter mit auf das Unendliche adaptierten Augen und paralleler Blickrichtung auf einen im Endlichen angeordneten Bildschirm blickt, der Schnittpunkt der Beobachtungsstrahlengänge für das linke und rechte Auge des Betrachters in der Ebene des Bildschirms liegt.

Die US 4,744,633 offenbart ein System für das stereoskopische Visualisieren von Bildinformation. Bei diesem System wird einer Beobachtungsperson ein linkes und ein rechtes stereoskopisches Teilbild durch zwei Prismen hindurch an einer Anzeigeeinrichtung mit einem Stereowinkel visualisiert, welcher der natürlichen konvergenten Blickrichtung der Beobachtungsperson auf die Ebene der Teilbilder entspricht. Der senkrechte Abstand des linken und rechten Beobachtungsstrahlengangs ist jedoch hier konstant und hat kein von der Anzeigefläche abliegendes Minimum.

In der DE 27 42 764 A1 ist eine Sehhilfe für das stereoskopische Visualisieren von Bildinformation beschrieben, in der es für das linke und das rechte Auge eines Beobachters jeweils ein verstellbares Prisma für das Ablenken der Blickrichtung gibt. Angaben zu einem vorteilhaften Stereowinkel gibt es hier nicht.

Aus der GB 2 308 677 A ist das Visualisieren von stereoskopischer Bildinformation mit einer Anzeigeeinrichtung bekannt, indem einer Beobachtungsperson Bildinformation mit Blickrichtungen für das linke und rechte Auge, die zueinander parallel sind, d. h. bei dem Stereowinkel "Null" zur Anzeige gebracht wird.

In bekannten Systemen für das Visualisieren von dreidimensionaler Bildinformation besteht das Problem, dass die von einem Betrachter wahrgenommene Entfernung eines mit der Anzeigeeinrichtung visualisierten dreidimensionalen Objekts von der Entfernung des Beobachterauges zu derjenigen Fokusebene abweicht, auf die das Beobachterauge akkommodiert ist. Dieser Umstand verursacht bei vielen Menschen körperliches Unwohlsein, insbesondere Schwindelgefühl.

Aufgabe der Erfindung ist es, für einen Betrachter das Visualisieren von dreidimensionaler Bildinformation mit verbessertem Sehkomfort zu ermöglichen.

Diese Aufgabe wird mit einem System nach Anspruch 1 und mit einem Verfahren nach Anspruch 10 gelöst.

Der Erfindung liegt dabei der Gedanke zugrunde, dass ein Betrachter ein mit dem System visualisiertes dreidimensionales Objekt mit hohem Sehkomfort beobachten kann, wenn für die Augen mittels der Sehhilfe ein Stereowinkel eingestellt wird, der im Wesentlichen dem Stereowinkel entspricht, unter dem die Anzeigefläche der das dreidimensionale Objekt visualisierenden Anzeigeeinrichtung auf natürliche Weise gesehen wird. Insbesondere ist es ein Gedanke der Erfindung, dass wenn für die Ablage des Schnittpunkts des nach Unendlich extrapolierten linken und rechten Beobachtungsstrahlengangs die Position einer mit der Anzeigeeinrichtung zur Anzeige gebrachten dreidimensionalen Objektstruktur entspricht, für den Betrachter ein angenehmes, entspanntes Sehen dieser Objektstruktur ermöglicht wird

In Weiterbildung der Erfindung hat der linke Beobachtungsstrahlengang mit dem rechten Beobachtungsstrahlengang einen gemeinsamen Schnittpunkt.

Die Anzeigeeinrichtung in dem System ist so ausgelegt, dass das linke Teilbild mit einer ersten Gruppe von in der Anzeigefläche liegenden Anzeigezonen erzeugt wird. Das rechte Teilbild wird dann mit einer zweiten Gruppe von in der Anzeigefläche liegenden Anzeigezonen generiert. Das linke und rechte Teilbild wird dabei dem linken und rechten Auge mit einem linken und rechten Beobachtungsstrahlengang zur Anzeige gebracht, in dem eine Optikbaugruppe angeordnet ist, die das von der ersten Gruppe von Anzeigezonen herrührende Licht in dem linken Beobachtungsstrahlengang von dem Licht trennt, das dieser Beobachtungsstrahlengang von der zweiten Gruppe von Anzeigezonen erhält. Dem linken Auge wird dann nur das Licht aus der ersten Gruppe von Anzeigezonen zugeführt. Gleichzeitig wird das Licht aus der zweiten Gruppe ausgewählter Anzeigezonen in dem rechten Beobachtungsstrahlengang von dem Licht getrennt, das dieser Beobachtungsstrahlengang von der ersten Gruppe von Anzeigezonen erhält. Der rechte Beobachtungsstrahlengang führt das Licht aus der zweiten Gruppe von Anzeigezonen zu dem rechten Auge. Für das Trennen des linken und rechten Teilbildes mit der stereoskopischen Bildinformation eignen sich grundsätzlich alle bekannten Verfahren zur Bildtrennung, die z. B. in dem Fachbuch "ABC der Optik", Mütze, Verlag Werner Dausien,1960" auf der S. 135 bis 138 detailliert beschreiben sind.

Es ist günstig, wenn die Anzeigeeinrichtung das linke und rechte Teilbild mit unterschiedlich polarisiertem Licht erzeugt und die Optikbaugruppe ein erstes Polarisationsfilter enthält, mittels dessen das von der ersten Gruppe von Anzeigezonen herrührende Licht in dem linken Beobachtungsstrahlengang von dem Licht trennt, das der linke Beobachtungsstrahlengang von der zweiten Gruppe von Anzeigezonen erhält, und ein zweites Polarisationsfilter aufweist, mittels dessen das von der zweiten Gruppe von Anzeigezonen herrührende Licht in dem rechten Beobachtungsstrahlengang von dem Licht getrennt wird, das der rechte Beobachtungsstrahlengang von der zweiten Gruppe von Anzeigezonen zugeführt wird.

Die Anzeigeeinrichtung kann aber auch das linke und rechte Teilbild zeitsequentiell erzeugen. In diesem Fall enthält die Optikbaugruppe einen ersten steuerbaren Shutter, der das dem linken Beobachtungsstrahlengang von der ersten Gruppe von Anzeigezonen zugeführte Licht von dem Licht trennt, das der linke Beobachtungsstrahlengang von der zweiten Gruppe von Anzeigezonen erhält. Die Anzeigeeinrichtung weist dann auch einen zweiten steuerbaren Shutter auf, der das dem rechten Beobachtungsstrahlengang von der zweiten Gruppe von Anzeigezonen zugeführte Licht von dem Licht trennt, das dem rechten Beobachtungsstrahlengang von der ersten Gruppe von Anzeigezonen bereitgestellt wird.

Es ist außerdem möglich, dass die Optikbaugruppe für das Trennen des Lichts der ersten und zweiten Gruppe ausgewählter Anzeigezonen ein als Parallaxebarriere wirkendes Blendensystem aufweist. Die Optikbaugruppe kann auch für das Trennen des Lichts der ersten und zweiten Gruppe von Anzeigezonen eine Prismenmatrix umfassen, die eine Vielzahl von in einer vertikalen Richtung sich erstreckenden Prismenabschnitten aufweist, die jeweils einen der Anzeigefläche zugewandten, vorzugsweise linsenförmigen, insbesondere zylinderlinsenförmigen Bereich mit einer konvexen Oberfläche haben.

Von Vorteil ist es, wenn die Optikbaugruppe einstellbar gestaltet ist und ein Variieren des Verlaufs des linken und rechten Beobachtungsstrahlengangs zwischen der Anzeigefläche und dem linken und rechten Auge ermöglicht. Dann kann ein Betrachter in unterschiedlichen Abständen von der Anzeigefläche stereoskopische Bildinformation mit einem dreidimensionalen Seheindruck wahrnehmen. Eine Idee der Erfindung ist es auch, die Optikbaugruppe in die Sehhilfe zu integrieren.

Auch die Sehhilfe ist bevorzugt einstellbar. Sie ermöglicht dann in Abhängigkeit von einer an der Anzeigeeinrichtung zur Anzeige gebrachten Bildinformation ein Variieren der Stelle in dem linken und rechten Beobachtungsstrahlengang, in welcher der senkrechte Abstand des in das Unendliche extrapolierten linken Beobachtungsstrahlengangs von dem in das Unendliche extrapolierten rechten Beobachtungsstrahlengang minimal ist. Ein Betrachter kann dann durch Anpassen der Sehhilfe mit dem System auch zur Anzeige gebrachte dreidimensionale Strukturen entspannt sehen, die einen unterschiedlichen Abstand von der Anzeigefläche haben.

Von Vorteil ist es, wenn die Sehhilfe hierfür mit einer Steuereinrichtung verbunden ist, mit welcher der Abstand der Stelle in dem linken und rechten Beobachtungsstrahlengang von der Anzeigefläche, in welcher der senkrechte Abstand des in das Unendliche extrapolierten linken Beobachtungsstrahlengangs von dem in das Unendliche extrapolierten rechten Beobachtungsstrahlengang minimal ist, in Abhängigkeit der an der Anzeigeeinrichtung zur Anzeige gebrachten Bildinformation eingestellt werden kann. Auf diese Weise wird insbesondere bei einer sich im Raum bewegenden dreidimensionalen Struktur ein entspanntes Wahrnehmen der Bildinformation ermöglicht. Eine Idee der Erfindung ist es insbesondere, die horizontale prismatische Wirkung $P_{132}$, $P_{134}$ der Sehhilfe in dem linken und rechten Beobachtungsstrahlengang wie folgt einzustellen:

$$P_{132} \quad = 100\,\tfrac{\text{cm}}{\text{m}}\tan\left\{\arctan\left(\tfrac{P_D}{2D}\right) - \arctan\left(\tfrac{P_D}{2E}\right)\right\} \approx 100\,\tfrac{\text{cm}}{\text{m}}\tfrac{P_D}{2}\left\{\tfrac{1}{D} - \tfrac{1}{E}\right\}$$

$$P_{134} \quad = 100\,\tfrac{\text{cm}}{\text{m}}\tan\left\{-\arctan\left(\tfrac{P_D}{2D}\right) + \arctan\left(\tfrac{P_D}{2E}\right)\right\} \approx -100\,\tfrac{\text{cm}}{\text{m}}\tfrac{P_D}{2}\left\{\tfrac{1}{D} - \tfrac{1}{E}\right\},$$

wobei $P_D$ die Pupillendistanz der Augen des Betrachters, E der Abstand der Anzeigefläche und D der Abstand einer mit der Anzeigeeinrichtung zur Anzeige gebrachten dreidimensionalen Struktur von den Augen des Betrachters ist. Eine Idee der Erfindung ist es dabei auch, die Optikbaugruppe in die Sehhilfe zu integrieren.

Eine Idee ist es insbesondere, die Sehhilfe in dem System für das Visualisieren von dreidimensionaler Bildinformation als Brille zu gestalteten. Vorteilhafter Weise enthält diese Brille Brillengläser, die eine einander entgegengesetzte prismatische Wirkung haben. Indem die horizontale prismatische Wirkung der Brillengläser eingestellt werden kann, ist es möglich, dass ein Betrachter dreidimensionale Strukturen an einer Anzeigefläche entspannt sehen kann, deren Ablage von der Anzeigefläche variabel ist. Bei dem erfindungsgemäßen Verfahren für das Visualisieren von dreidimensionaler Bildinformation wird mit einer Anzeigeeinrichtung, die eine Anzeigefläche für das Anzeigen von einem linken und rechten Teilbild aufweist, einem linken Auge eines Betrachters ein linkes Teilbild in einer ersten Blickrichtung mit einem linken Beobachtungsstrahlengang bereitgestellt und einem rechten Auge des Betrachters ein rechtes Teilbild in einer zweiten Blickrichtung mit einem rechten Beobachtungsstrahlengang zur Anzeige gebracht. Der Strahlverlauf für den linken und rechten Beobachtungsstrahlengang wird dabei so eingestellt, dass ausgehend von dem linken und rechten Auge in der zu der Anzeigefläche weisenden Richtung der senkrechte Abstand des in das Unendliche extrapolierten linken Beobachtungsstrahlengangs von dem in das Unendliche extrapolierten rechten Beobachtungsstrahlengang abnimmt und an einer von der Anzeigefläche endlich beabstandeten Stelle, d.h. an einer Stelle in dem linken und rechten Beobachtungsstrahlengang ein Minimum aufweist, die einen endlichen Abstand von der Anzeigefläche hat.

Im Folgenden wird die Erfindung anhand der in der Zeichnung in schematischer Weise dargestellten Ausführungsbeispiele näher erläutert.

Es zeigen:

Fig. 1    ein erstes System zum stereoskopischen Visualisieren von dreidimensionaler Bildinformation mittels polarisiertem Licht an einer Anzeigefläche;

Fig. 2    die Anzeigefläche einer Anzeigeeinrichtung in dem ersten System;

Fig. 3    ein zweites System zum stereoskopischen Visualisieren von dreidimensionaler Bildinformation mittels pulsierendem Licht;

Fig. 4    die Anzeigefläche einer Anzeigeeinrichtung in dem zweiten System;

Fig. 5    ein drittes System zum stereoskopischen Visualisieren von dreidimensionaler Bildinformation an einer Anzeigefläche mit einer Parallaxeblende;

Fig. 6    ein viertes System zum stereoskopischen Visualisieren von dreidimensionaler Bildinformation an einer Anzeigefläche mit einer Prismenmatrix; und

Fig. 7    ein fünftes System zum stereoskopischen Visualisieren von dreidimensionaler Bildinformation an einer Anzeigefläche mit einer als Brille ausgebildeten Sehhilfe.

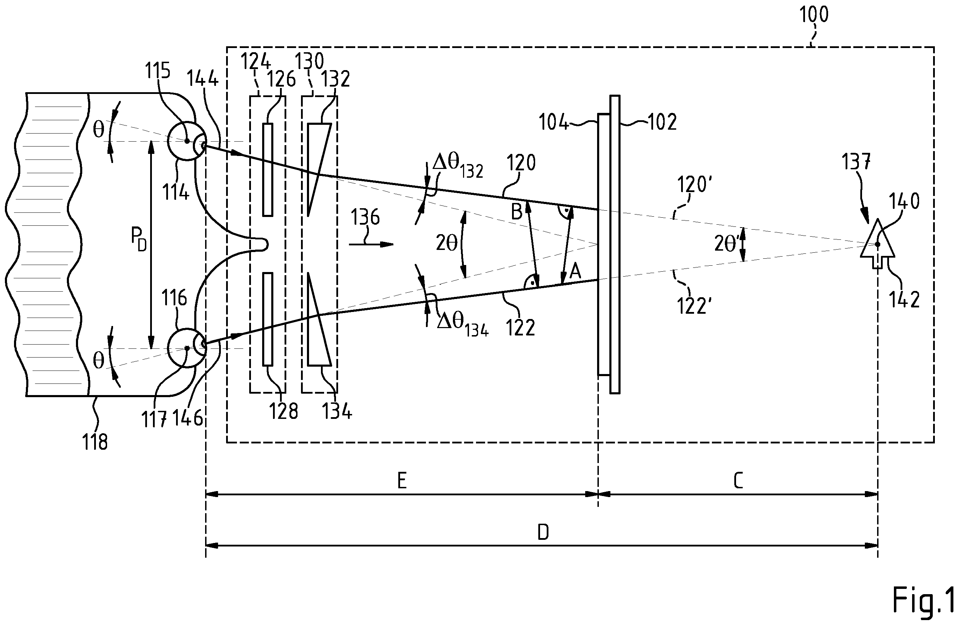

Die Fig. 1 zeigt ein System 100 zum stereoskopischen Visualisieren von Bildinformation. Das System 100 hat eine Anzeigeeinrichtung 102 mit einer Anzeigefläche 104. Die Anzeigeeinrichtung 102 enthält ein Zweischicht LCD-Display. Ein solches Zweischicht LCD-Display kann einen Aufbau haben, der den in der US 2006/0203338 A1 anhand der Figuren detailliert beschriebenen LCD-Displays entspricht.

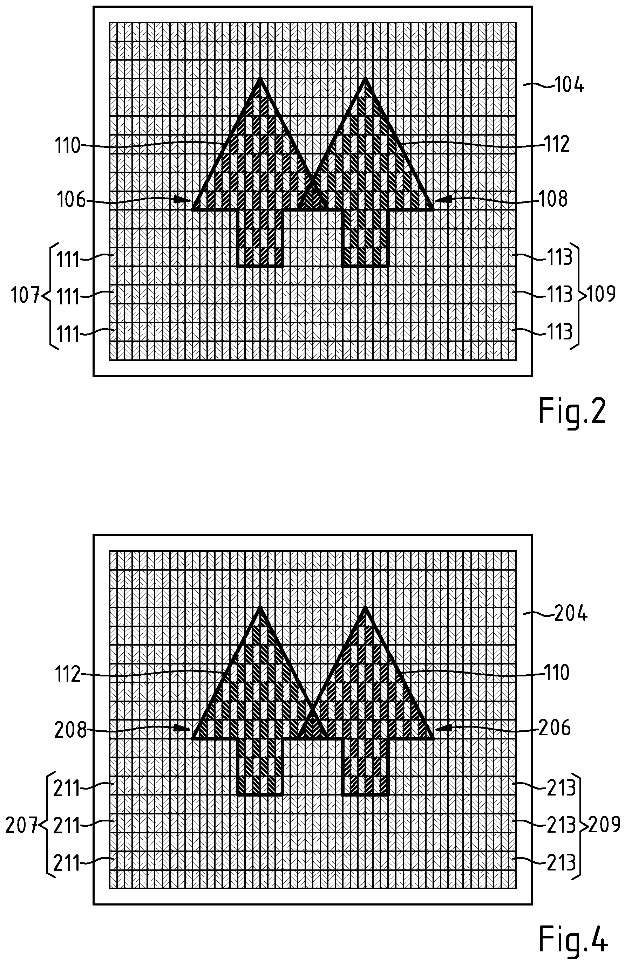

Die Fig. 2 zeigt die Anzeigefläche 104 der Anzeigeeinrichtung 102 in einer Draufsicht. Die Anzeigeeinrichtung 102 erzeugt in der Anzeigefläche 104 ein linkes stereoskopisches Teilbild 106 und ein rechtes stereoskopisches Teilbild 108. Das linke Teilbild 106 ist mit einer ersten Gruppe 107 von Anzeigezonen 111 mit Bildpunkten 110 des Zweischicht LCD-Displays aufgebaut, die horizontal polarisiertes Licht aussenden. Das rechte Teilbild 108 besteht aus einer zweiten Gruppe 109 von Bildpunkten 112 des Zweischicht LCD-Displays in Anzeigezonen 113, die vertikal polarisiertes Licht abgeben.

Mit dem System 100 kann einem linken und rechten Betrachterauge 114, 116 eines Betrachters 118 mit der auf den Augendrehpunkt 115, 117 bezogenen Pupillendistanz $P_D$ das linke und rechte Teilbild 106, 108 mit einem linken und rechten Beobachtungsstrahlengang 120, 122 zur Anzeige gebracht werden.

In dem System 100 gibt es eine Optikbaugruppe 124 mit einem Polarisationsfilter 126, das für das horizontal polarisiertes Licht der Bildpunkte 110 des linken Teilbilds 106 durchlässig ist und mit einem Polarisationsfilter 128 für das vertikal polarisierte Licht aus den Bildpunkten 112 des rechten Teilbildes 108. Das Polarisationsfilter 124 ist für das Licht der Bildpunkte 110 des linken Teilbildes 106 undurchlässig. Entsprechend wird mittels des Polarisationsfilters 124 das Licht der Bildpunkte 112 des rechten Teilbildes 108 blockiert. Die Optikbaugruppe 124 ist in dem linken und rechten Beobachtungsstrahlengang 120, 122 angeordnet.

Die Optikbaugruppe 124 in dem System 100 trennt das Licht der Bildpunkte 110 des Zweischicht LCD-Displays von dem Licht der Bildpunkte 112. Die Optikbaugruppe 124 bewirkt, dass das Licht aus den Bildpunkten 110 dem linken Betrachterauge 114 zugeführt wird und das rechte Betrachterauge 116 das Licht aus den Bildpunkten 112 an der Anzeigefläche 104 der Anzeigeeinrichtung 102 erhält.

In dem System 100 gibt es eine Sehhilfe 130. Die Sehhilfe 130 hat ein optisches Element in Form eines ersten Prismas 132 und weist ein optisches Element in Form eines zweiten Prismas 134 auf. Die Sehhilfe 130 ist vor den Betrachteraugen 114, 116 des Betrachters 118 angeordnet. Mit der Sehhilfe 130 wird für den linken und rechten Beobachtungsstrahlengang 120, 122 ein Strahlverlauf eingestellt, bei dem ausgehend von dem linken und rechten Betrachterauge 114, 116 in der zu der Anzeigefläche 104 weisenden Richtung 136 der senkrechte Abstand A, B des in das Unendliche extrapolierten linken Beobachtungsstrahlengangs 120, 120' von dem in das Unendliche extrapolierten rechten Beobachtungsstrahlengang 122, 122' abnimmt. An der Stelle 136 in dem linken und rechten Beobachtungsstrahlengang 120, 122, die von der Anzeigefläche 104 mit der senkrechten Ablage C beabstandet ist, haben der in das Unendliche extrapolierte linke Beobachtungsstrahlengang 120 und der in das Unendliche extrapolierte rechte Beobachtungsstrahlengag 122 einen Schnittpunkt 140. Der senkrechte Abstand A des linken Beobachtungsstrahlengangs 120 von dem rechten Beobachtungsstrahlengang 122 und der senkrechte Abstand B des rechten Beobachtungsstrahlengangs 122 von dem linken Beobachtungsstrahlengang 120 weist hier also ein Minimum auf.

Mit der Sehhilfe 130 kann der Betrachter 118 eine bei dem Schnittpunkt 140 wahrgenommene Struktur 142 aufgrund der Fusion eines linken und rechten Teilbildes 106, 108 in seinem Gehirn als dreidimensionales Objekt wahrnehmen. Die Struktur 142 wird dabei in einer scheinbaren Entfernung D von dem Betrachter unter einem Stereowinkel $2\theta'$ beobachtet. Die Betrachteraugen 114, 116 stehen dabei jedoch mit einer Blickrichtung 144 und einer Blickrichtung 146 zueinander, die dem Stereowinkel $2\theta$ entspricht, unter dem ein Objekt auf der Anzeigefläche 104, das den Abstand E von den Betrachteraugen 114, 116 hat, mit einer physiologisch natürlichen Blickrichtung 144, 146 fokussiert wird.

Mittels des Prismas 132 wird der linke Beobachtungsstrahlengang 120 um den Winkel $\Delta\theta_{132} = \theta' - \theta$ abgelenkt. Das Prisma 134 ändert die Richtung des rechten Beobachtungsstrahlengangs 122 um den Winkel $\Delta\theta_{134} = \theta - \theta'$.

Die prismatische Wirkung

$$(1) \qquad P_{132} := 100\,\frac{\text{cm}}{\text{m}}\tan\Delta\theta_{132}$$

des ersten Prismas 132 und die prismatische Wirkung

$$(2) \qquad P_{134} := 100\,\frac{\text{cm}}{\text{m}}\tan\Delta\theta_{134}$$

des zweiten Prismas 134 in der Sehhilfe 130 sind dabei einander entgegengesetzt.

Nach der Idee der Erfindung wird bei einer gegebenen Entfernung E des Betrachters 118 von der Anzeigefläche 104 und einem vorgegebenen Abstand C einer von dem Betrachter 118 durch Fusion eines linken und rechten Teilbildes 106, 108 wahrgenommenen Struktur 142 von der Anzeigefläche 104 die prismatische Wirkung der Prismen 132, 134 entsprechend der nachfolgend angegebenen Beziehung eingestellt:

$$(3) \quad P_{132} = 100\,\frac{\text{cm}}{\text{m}}\tan\left\{-\arctan\left(\frac{P_D}{2D}\right) + \arctan\left(\frac{P_D}{2E}\right)\right\} \approx -100\,\frac{\text{cm}}{\text{m}}\frac{P_D}{2}\left\{\frac{1}{D} - \frac{1}{E}\right\}$$

$$(4) \quad P_{134} = 100\,\frac{\text{cm}}{\text{m}}\tan\left\{\arctan\left(\frac{P_D}{2D}\right) - \arctan\left(\frac{P_D}{2E}\right)\right\} \approx 100\,\frac{\text{cm}}{\text{m}}\frac{P_D}{2}\left\{\frac{1}{D} - \frac{1}{E}\right\},$$

wobei gilt: D := E + C.

Unter der Voraussetzung, dass das Sehvermögen des Betrachters 118 nicht beeinträchtigt ist und es für ihn deshalb keiner Refraktion bedarf, kann der Betrachter 118 dann mit einer der Fokuseinstellung der Augen 114, 116 entsprechenden natürlichen Blickrichtung 144, 146 die Struktur 142 beobachten. Die in den vorstehenden Formelbeziehung (3) und (4) angegebene Näherung ist dabei unter der Annahme gültig, dass die Pupillendistanz $P_D$ der Augen 114, 116 des Betrachters gegenüber den Abständen D und E klein ist.

Der Vollständigkeit halber sei bemerkt, dass es auch möglich ist, die Anzeigeeinrichtung 102 in grundsätzlich bekannter Weise auch für das Anzeigen von dreidimensionaler Bildinformation unter Verwendung von zirkular polarisiertem Licht auszulegen.

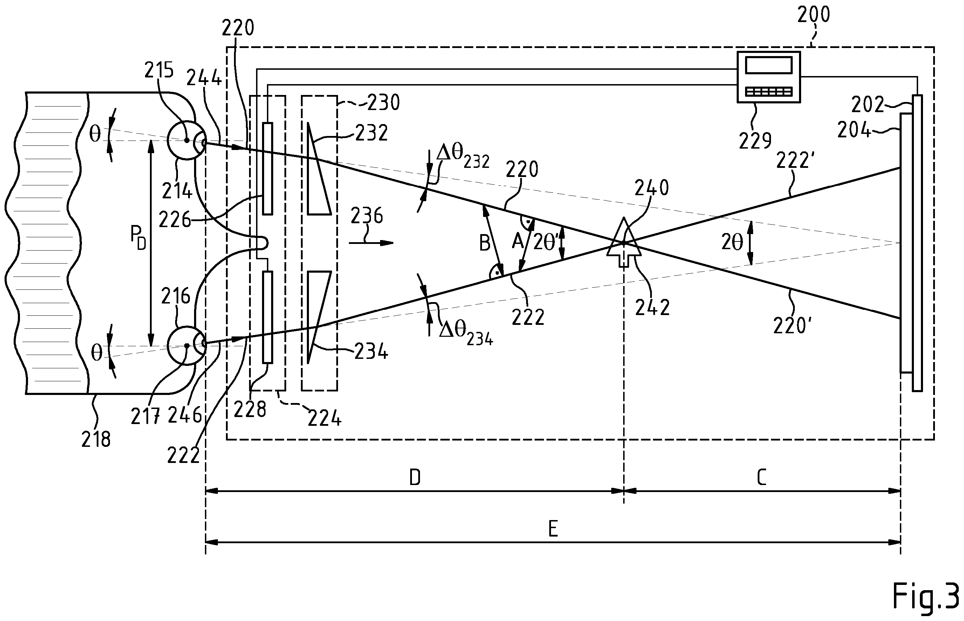

Die Fig. 3 zeigt ein zweites System 200 zum stereoskopischen Visualisieren von Bildinformation. Soweit der Aufbau und die Funktion des System 200 der Funktion und dem Aufbau des vorstehend anhand von Fig. 1 und Fig. 2 erläuterten System 100 entspricht, sind die in der Fig. 2 gezeigten Baugruppen und Elemente mit in Bezug auf die Fig. 1 um die Zahl 100 erhöhten Bezugszeichen kenntlich gemacht.

Das System 200 hat eine Anzeigeeinrichtung 202 mit einer Anzeigefläche 204. Die Fig. 4 zeigt die Anzeigefläche 204 der Anzeigeeinrichtung 202 in einer Draufsicht. Die Anzeigeeinrichtung 202 erzeugt in der Anzeigefläche 204 ein linkes und rechtes stereoskopisches Teilbild 206, 208 mit den Bildpunkten 210, 212 alternierend zeitsequentiell. Das linke Teilbild 206 ist hier mit einer ersten Gruppe 207 von Anzeigezonen 211 mit Bildpunkten 210 eines TFT -Displays aufgebaut. Das rechte Teilbild 208 besteht aus einer zweiten Gruppe 209 von Bildpunkten 212 des TFT-Displays in Anzeigezonen 113. Wenn die Anzeigezonen 211 Licht aussenden, wird von den Anzeigezonen 213 kein Licht abgegeben. Umgekehrt erzeugen die Anzeigezonen 213 Licht, wenn die Anzeigezonen 211 dunkel sind.

In dem System 200 gibt es eine Optikbaugruppe 224 mit einem Shutter 226, und einem Shutter 228. Die Optikbaugruppe 224 ist mit der Anzeigeeinrichtung 202 mit einer Steuereinrichtung 229 gekoppelt. Die Steuereinrichtung 229 erhält von der Anzeigeeinrichtung 202 eine Information über den Anzeigezustand der Anzeigezonen 211, 213 des TFT-Displays. Aufgrund dieser Information werden der Shutter 226 und der Shutter 228 mittels der Steuereinrichtung 229 so eingestellt, dass das Licht der Bildpunkte 210 des linken Teilbildes 206 nur zu dem linken Betrachterauge 214 gelangt und das rechte Betrachterauge 216 nur das Licht der Bildpunkte von dem rechten Teilbild 208 erhält. Wenn die Bildpunkte 210 des linken Teilbildes 206 Licht aussenden, ist der Shutter 228 für das Licht undurchlässig geschaltet und der Shutter 226 geöffnet. Entsprechend ist der Shutter 226 undurchlässig geschaltet, wenn von den Bildpunkten 212 des rechten Teilbildes 206 Licht ausgesendet wird. Der Shutter 228 ist für dieses Licht dann durchlässig.

Mittels des Prismas 232 wird der linke Beobachtungsstrahlengang 220 um den Winkel $\Delta\theta_{232} = \theta' - \theta$ abgelenkt. Das Prisma 234 ändert die Richtung des rechten Beobachtungsstrahlengangs 222 um den Winkel $\Delta\theta_{234} = \theta - \theta'$.

Auch hier ist die prismatische Wirkung

$$(5) \qquad P_{232} := 100\frac{cm}{m}\tan\Delta\theta_{232}$$

des optischen Elements in Form eines ersten Prismas 232 zu der prismatischen Wirkung

$$(6) \qquad P_{234} := 100\frac{cm}{m}\tan\Delta\theta_{234}$$

des als Prisma 234 ausgebildeten zweiten optischen Elements in der Sehhilfe 230 entgegengesetzt.

Bei einer gegebenen Entfernung E des Betrachters 218 von der Anzeigefläche 204 und einem vorgegebenen Abstand C einer von dem Betrachter 218 durch Fusion eines linken und rechten Teilbildes 206, 208 wahrgenommenen Struktur 242 von der Anzeigefläche 204 gilt für die prismatische Wirkung der Prismen 232, 234 in dem System 200 die nachfolgend angegebene Beziehung:

$$(7) \quad P_{232} \;=\; 100\frac{cm}{m}\tan\left\{\arctan\left(\frac{P_D}{2D}\right) - \arctan\left(\frac{P_D}{2E}\right)\right\} \approx 100\frac{cm}{m}\frac{P_D}{2}\left\{\frac{1}{D} - \frac{1}{E}\right\},$$

$$(8) \quad P_{234} \;=\; 100\frac{cm}{m}\tan\left\{-\arctan\left(\frac{P_D}{2D}\right) + \arctan\left(\frac{P_D}{2E}\right)\right\} \approx -100\frac{cm}{m}\frac{P_D}{2}\left\{\frac{1}{D} - \frac{1}{E}\right\},$$

wobei gilt: D: = E - C.

Unter der Annahme, dass das Sehvermögen des Betrachters 218 nicht beeinträchtigt ist und es für ihn deshalb keiner Refraktion bedarf, kann der Betrachter 218 dann mit einer der Fokuseinstellung der Augen 214, 216 entsprechenden Blickrichtung 244, 246 die Struktur 242 beobachten. Auch hier ist die Näherung in den vorstehenden Formelbeziehungen (7) und (8) unter der Annahme gültig, dass die Pupillendistanz $P_D$ der Augen 114, 116 des Betrachters deutlich kleiner ist als die Abstände D bzw. E.

Die Erfinder haben herausgefunden, dass bei der bei einem erwachsenen Menschen üblichen Pupillendistanz $P_D$ = 65 mm die für das scharfe Sehen von Bildinformation auf einer in dem Abstand E von den Augen 114, 116, 214, 216 eines Betrachters 118, 218 angeordneten Anzeigefläche 104, 204 erforderliche Akkomodation $A_k$, das ist die Änderung der Brechkraft des auf unendlich adaptierten Auges, und der diesem Abstand E entsprechende Stereowinkel $2\theta$ in Bezug auf die optische Achse der Blickrichtung 144, 146, 244, 246 des linken und rechten Auges 114, 116, 214, 216 mit einer dem Stereowinkel $2\theta$ entsprechenden gesamten prismatischen Wirkung

$$(9) \qquad P \;:= 100\frac{cm}{m}\tan 2\theta$$

die in der nachfolgenden Tabelle 1 angegebene Beziehung haben:

Tabelle 1

| E [m] | $A_k$ [dpt] | P [cm/m] | $\theta$ [°] |
|---|---|---|---|
| 15,0 | 0,07 | 0,43 | 0,12 |
| 10,0 | 0,10 | 0,65 | 0,19 |
| 5,0 | 0,20 | 1,30 | 0,37 |
| 3,0 | 0,33 | 2,17 | 0,62 |
| 2,0 | 0,50 | 3,25 | 0,93 |
| 1,9 | 0,53 | 3,42 | 0,98 |
| 1,0 | 1,00 | 6,50 | 1,86 |
| 0,8 | 1,25 | 8,13 | 2,33 |
| 0,5 | 2,00 | 13,00 | 3,72 |
| 0,4 | 2,50 | 16,25 | 4,65 |
| 0,3 | 3,33 | 21,67 | 6,18 |
| 0,2 | 5,00 | 32,50 | 9,23 |

Die Erfinder haben insbesondere erkannt, dass mit einem System 100, 200 für einen Betrachter 118, 218 das entspannte Betrachten einer an einer in einer Entfernung $E_1$ = 3,0 m von dem Betrachter angeordneten Anzeigefläche 104, 204 angezeigten dreidimensionalen Struktur 140, 240 ermöglicht wird, die von dem Betrachter 118, 218 mit einem Abstand $C_1$ = 1,10 m auf der zu dem Betrachter 118, 218 weisenden Seite der Anzeigefläche 104, 204 wahrgenommen wird, die also einen scheinbaren Abstand $D_1$ = 1,90 m von den Augen des Betrachters 118, 218 hat, wenn mit der Sehhilfe 130, 230 in dem linken und rechten Beobachtungsstrahlengang 120, 220, 122, 222 ein optisches Element mit einer bestimmten prismatischen Wirkung $P_{132,232}$, $P_{134,234}$ angeordnet wird. Die Erfinder haben herausgefunden, dass wenn die Sehhilfe 130, 240 für das linke und rechte Auge 114, 116, 214, 216 die aus der nachfolgend aufgeführten Tabelle 2 abgeleitete prismatische Wirkung $P_{132,232}$, $P_{134,234}$ aufweist, die einem Ablenkungswinkel $\Delta\theta_{132,232}$, $\Delta\theta_{134,234}$ entspricht, für den Betrachter 118, 218 entspanntes Sehen ohne Ermüden ermöglicht wird.

Tabelle 2

| E [m] | $A_k$ [dpt] | P [cm/m] | $\theta$ [°] |
|---|---|---|---|
| 3,0 | 0,33 | 2,17 | 0,62 |
| 1,9 | 0,53 | 3,42 | 0,98 |

$$(10) \qquad P_{132,232} := \frac{1}{2}(3,42 - 2,17) = 0,625$$

$$(11) \qquad P_{134,234} := \frac{1}{2}(2,17 - 3,42) = -0,625$$

$$(12) \qquad \Delta\theta_{132,232} := \arctan\left(P_{132,232}\right) = 0,36°$$

$$(13) \qquad \Delta\theta_{134,234} := \arctan\left(P_{134,234}\right) = -0,36°$$

Die Entfernung $E_1$ = 3,0 m entspricht einer üblichen Entfernung eines Betrachters von einem Fernseher in einem Wohnzimmer.

Die Erfinder haben auch erkannt, dass deshalb mit dem System 100, 200 ein bequemes Betrachten eines an einer in einer Entfernung $E_2$ = 0,5 m von dem Betrachter angeordneten Anzeigefläche 104, 204 angezeigten dreidimensionalen Struktur 140, 240 ermöglicht werden kann, die sich scheinbar mit dem Abstand $C_2$ = -0,40 m auf der zu dem Betrachter 118, 218 weisenden Seite der Anzeigefläche 104, 204 befindet, wenn die Sehhilfe 130, 230 für das linke und rechte Auge 114, 116, 214, 216 die in der nachfolgend aufgeführten Tabelle 3 abgeleitete prismatische Wirkung $P_{132,232}$, $P_{134,234}$ hat.

Tabelle 3

| E [m] | $A_k$ [dpt] | P [cm/m] | $2\theta$ [°] |
|---|---|---|---|
| 0,5 | 2,00 | 13,00 | 0,62 |
| 0,40 | 2,50 | 16,25 | 0,98 |

$$(14) \qquad P_{132,232} := \frac{1}{2}(16,25 - 13,00) = 1,625$$

$$(15) \qquad P_{134,234} := \frac{1}{2}(13,00 - 16,25) = -1,625$$

$$(16) \qquad \Delta\theta_{132,232} := \arctan\left(P_{132,232}\right) = 58,39°$$

$$(17) \qquad \Delta\theta_{134,234} := \arctan\left(P_{134,234}\right) = -58,39°$$

Die Entfernung $E_2$ = 0,5 m entspricht einer üblichen Entfernung eines Betrachters von einer Anzeigefläche eines Mobilfunktelefons, das der Betrachter in der Hand hält.

Die Erfinder haben darüber hinaus erkannt, dass deshalb mit dem System 100, 200 ein bequemes Betrachten eines an einer in einer Entfernung $E_3$ = 0,6 m von dem Betrachter angeordneten Anzeigefläche 104 angezeigten dreidimensionalen Struktur 140, 240 ermöglicht werden kann, die sich scheinbar mit dem Abstand $C_3$ = -0,83 m auf der zu dem Betrachter 118 weisenden Seite der Anzeigefläche 104, 204 befindet, wenn die Sehhilfe 130, 230 für das linke und rechte Auge 114, 116, 214, 216 die aus der nachfolgend aufgeführten Tabelle 4 abgeleitete prismatische Wirkung $P_{132,232}$, $P_{134,234}$ hat.

Tabelle 4

| E [m] | $A_k$ [dpt] | P [cm/m] | $2\theta$ [°] |
|---|---|---|---|
| 0,6 | 1,67 | 10,83 | 3,10 |
| 0,3 | 1,21 | 7,83 | 2,24 |

$$(18) \qquad P_{132,232} = \frac{1}{2}(10,83 - 7,83) = 1,5$$

$$(19) \qquad P_{134,234} = \frac{1}{2}(7,83 - 10,83) = -1,5$$

$$(20) \qquad \Delta\theta_{132,232} = \arctan\left(P_{132,232}\right) = 56,31°$$

$$(21) \qquad \Delta\theta_{134,234} = \arctan\left(P_{134,234}\right) = -56,31°$$

Die Entfernung $E_3$ = 0,6 m entspricht einer üblichen Entfernung eines Betrachters von einer Anzeigefläche eines handelsüblichen Computermonitors.

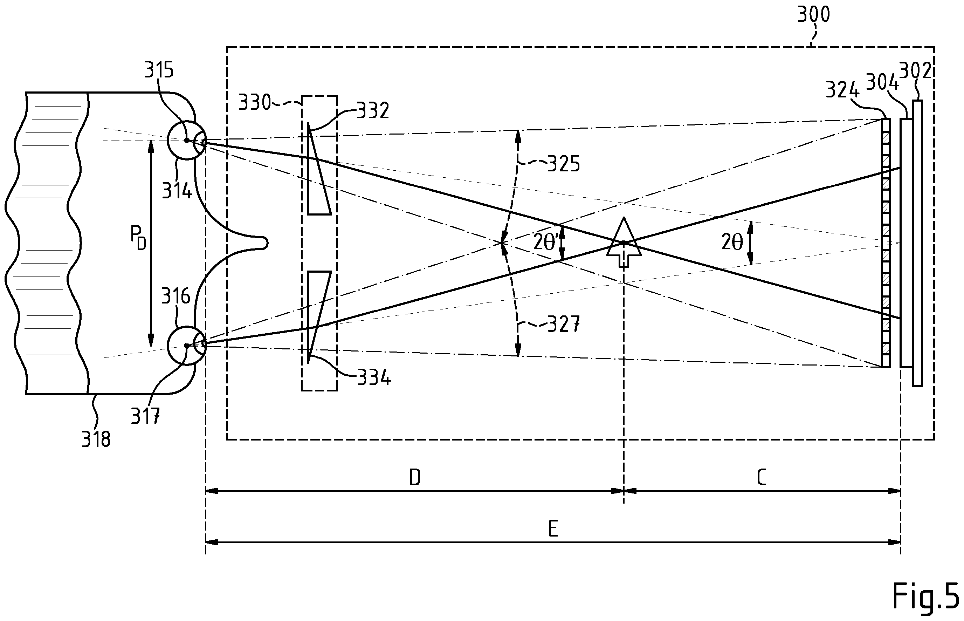

Die Fig. 5 zeigt ein drittes System 300 zum stereoskopischen Visualisieren von Bildinformation. Soweit der Aufbau und die Funktion des Systems 300 der Funktion und dem Aufbau des vorstehend anhand von Fig. 1 und Fig. 2 erläuterten System 100 entspricht, sind die in der Fig. 5 gezeigten Baugruppen und Elemente mit in Bezug auf die Fig. 1 um die Zahl 200 erhöhten Bezugszeichen kenntlich gemacht.

In dem System 300 gibt es eine auf der zu dem Betrachter 318 weisenden Seite der Anzeigeeinrichtung 302 abgeordnete Optikbaugruppe 324, die als Parallaxeblende ausgebildet ist. Eine solche Anzeigevorrichtung 302 mit einer Parallaxeblende 324 für das Visualisieren von dreidimensionaler Bildinformation ist z.B. in der US 7,626,674 beschrieben. Mit der Parallaxeblende 324 wird das von den Bildpunkten 110 eines in der Fig. 2 linken Teilbildes 106 ausgesendete Licht in einem Winkelbereich 325 ausgeblendet, in dem das Licht der Bildpunkte 112 eines in der Fig. 2 gezeigten rechten Teilbildes 108 zu dem rechten Auge 316 gelangt. Entsprechend blendet die Parallaxeblende 324 das Licht von den Bildpunkten 112 eines in der Fig. 2 gezeigten rechten Teilbildes 110 aus, das zu dem linken Auge 314 gelangt.

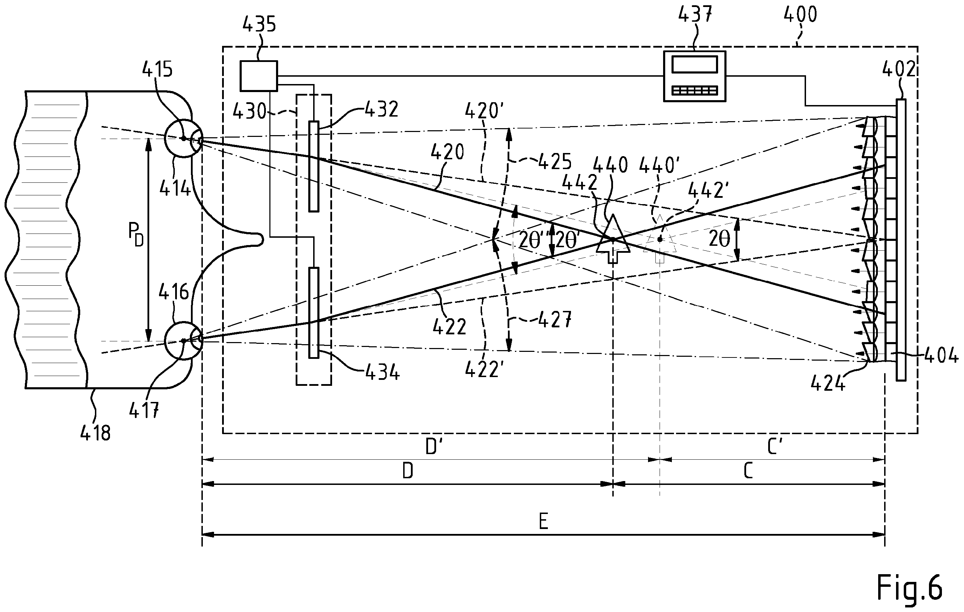

Die Fig. 6 zeigt ein viertes System 400 zum stereoskopischen Visualisieren von Bildinformation. Soweit der Aufbau und die Funktion des System 400 der Funktion und dem Aufbau des vorstehend anhand von Fig. 1 und Fig. 2 erläuterten System 100 entspricht, sind die in der Fig. 6 gezeigten Baugruppen und Elemente mit in Bezug auf die Fig. 1 um die Zahl 300 erhöhten Bezugszeichen kenntlich gemacht.

In dem System 400 gibt es eine auf der zu dem Betrachter 418 weisenden Seite der Anzeigeeinrichtung 402 angeordnete Optikbaugruppe 424, die als Prismenmatrix ausgebildet ist. Mit der Prismenmatrix 424 wird das von den Bildpunkten 110 des linken Teilbildes 106 ausgesendete Licht in einem Winkelbereich 425 zu dem linken Betrachterauge 414 gelenkt. Das rechte Betrachterauge 416 erhält das von den Bildpunkten 112 des rechten Teilbildes 108 ausgesendete Licht durch die Prismenmatrix 424 in dem Winkelbereich 427.

Das System 400 enthält eine Sehhilfe 430 mit einem als elektrooptisches Element 432 ausgebildeten optischen Element und einem als elektrooptisches Element 434 ausgebildeten optischen Element, dessen prismatische Wirkung $P_{432}$, $P_{434}$ mit einer Steuereinrichtung 435 eingestellt werden kann. Die elektrooptischen Elemente 432, 434 können z. B. als Flüssigkristallelemente gestaltet sein. Mittels der Steuereinrichtung 435 ist es möglich, den Schnittpunkt 440 des linken Beobachtungsstrahlengangs 420 mit dem rechten Beobachtungsstrahlengang zu verlagern und damit an die Position einer mit der Anzeigeeinrichtung 402 zur Anzeige gebrachten dreidimensionalen Struktur 442 anzupassen.

Die Steuereinrichtung 435 ist mit einer Rechnereinheit 437 verbunden, die eine Bildsteuerstufe enthält, mittels welcher die Bildpunkte 110, 112 eines in der Fig. 2 gezeigten linken und rechten Teilbildes 106, 108 angesteuert werden.

Die Rechnereinheit 437 enthält ein Computerprogramm, das für die Steuereinrichtung 435 eine Stellgröße für die prismatische Wirkung P des elektrooptischen Elements 432 und des elektrooptischen Elements 434 generiert. Damit wird der Schnittpunkt 440 des linken und rechten Beobachtungsstrahlenganges 420, 424 in Abhängigkeit der mit der Anzeigeeinrichtung 402 zur Anzeige gebrachten Bildinformation eingestellt. Wie in der Fig. 6 mit dem modifizierten linken und rechten Beobachtungsstrahlengang 420', 422' angedeutet, folgt hier der Schnittpunkt 440' mit dem dazugehörigen Stereowinkel 2θ" einer Verlagerung und Änderung der Struktur 442 zu der Struktur 442'. Auch bei einer Bewegung von an der Anzeigeeinrichtung 402 zur Anzeige gebrachten dreidimensionalen Strukturen vor und hinter die Anzeigefläche 404 ist damit für den Betrachter 418 ein entspanntes Sehen möglich.

Es sei bemerkt, dass das System 400 in einer modifizierten Ausführungsform mit einer Optikbaugruppe 430 ausgebildet werden kann, die für das Einstellen der prismatischen Wirkung $P_{432}$, $P_{434}$ in dem linken und rechten Beobachtungsstrahlengang als optische Elemente Prismen enthält, die um die optische Achse des linken und rechten Beobachtungsstrahlengangs 420, 422 gedreht werden können.

Eine Idee der Erfinder ist auch, die Sehhilfe in einem System zum stereoskopischen Visualisieren von Bildinformation so auszulegen, dass sich damit dreidimensionale Bildinformation in einem großen Sehfeld betrachten lässt. Der horizontale Bildfeldwinkel ω, die angemessene Entfernung E eines Betrachters von der Anzeigefläche und die Breite W der Anzeigefläche einer Anzeigeeinrichtung für das Visualisieren von dreidimensionaler Bildinformation sind in der nachfolgenden Tabelle 5 aufgeführt:

Tabelle 5

| E [m] | W [m] | $\omega = 2\arctan\left(\frac{W}{2E}\right)$ [°] | Anwendung |
|---|---|---|---|
| 3 | 1,8 | 33 | Heimfernseher |
| 8 | 22 | 108 | IMAX |
| 0,6 | 0,7 | 61 | 27" TFT-Monitor |
| 0,3 | 0,3 | 53 | Spielkonsole |

Wenn die stereoskopische Bildinformation in einem IMAX-Dome visualisiert wird, gilt für den Bildfeldwinkel ω sogar: ω = 180°.

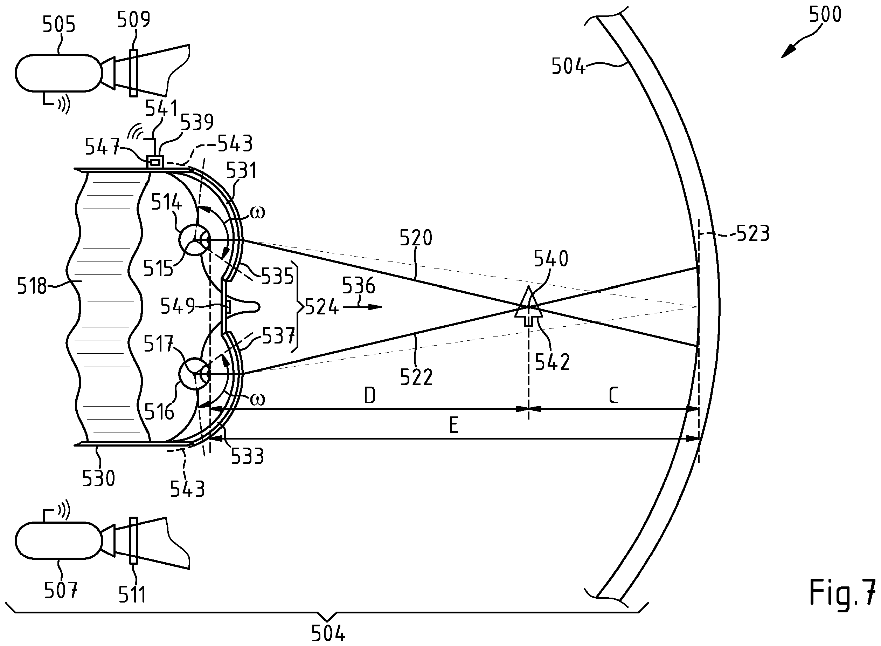

Die Fig. 7 zeigt ein fünftes System 500 zum stereoskopischen Visualisieren von Bildinformation mit einer Sehhilfe 530, mit der die an einer entsprechend einem IMAX-Dome kuppelförmig ausgebildete Anzeigefläche 504 einer Anzeigeeinrichtung 502 zur Anzeige gebrachten Bildinformation mit einem großen Bildfeldwinkel betrachtet werden kann.

Soweit der Aufbau und die Funktion des System 500 der Funktion und dem Aufbau des vorstehend anhand von Fig. 1 und Fig. 2 erläuterten System 100 entspricht, sind die in der Fig. 5 gezeigter Baugruppen und Elemente mit in Bezug auf die Fig. 1 um die Zahl 400 erhöhten Bezugszeichen kenntlich gemacht.

Das System 500 hat eine Anzeigeeinrichtung 502 mit einer kuppelförmigen Anzeigefläche 504. Auf die kuppelförmige Anzeigefläche 504 wird mittels Projektionseinrichtungen 505, 507 nach dem sogenannten Analglyphenverfahren eine dreidimensionale Bildinformation projiziert, die in einem linken und rechten Teilbild 106, 108 besteht, wie es in der Fig. 2 gezeigt ist. Dieses Analglyphenverfahren ist in dem Fachbuch "ABC der Optik, Mütze, Verlag Werner Dausien, 1960" auf der S. 137 detailliert erläutert. Das Licht der Projektionseinrichtung 505 ist dabei durch einen Rotfilter 509 geführt. Die Projektionseinrichtung 507 stellt das Licht durch ein Grünfilter 511 bereit. Mittels des Rotfilters 509 und des Grünfilters 511 wird das linke bzw. rechte Teilbild 106, 108 in zwei verschiedene Komplementärfarben eingefärbt.

Das System 500 enthält eine als Brille 530 gestaltete Sehhilfe. In dem System 500 ist die Optikbaugruppe 524 für das Trennen des Lichts von der ersten Gruppe von Anzeigezonen in dem linken Beobachtungsstrahlengang von dem Licht, das der rechte Beobachtungsstrahlengang von der zweiten Gruppe von Anzeigezonen erhält, in die Sehhilfe 530 integriert. Die Optikbaugruppe 524 ist hier mit einem auf dem Brillenglas 531 angeordneten roten Filterfolie 535 und ein auf dem Brillenglas 533 positionierten grünen Filterfolie 537 aufgebaut.

Die Brillengläser 531, 533 sind als elektrooptische Elemente gestaltet. Die Brillengläser 531, 533 haben einen Aufbau, wie er z.B. in der US 2007/0081126 A1 anhand der Fig. 7 und Fig. 8 beschrieben ist.

Die Brille 530 enthält eine Steuereinrichtung 539, mit der die Brechkraft und die prismatische Wirkung $P_{132}$, $P_{134}$ der Brillengläser 531, 533 eingestellt werden kann. Die Brechkraft der Brillengläser 531, 533 wird dabei so gesteuert, dass der linke und rechte Beobachtungsstrahlengang 520, 522 eine gemeinsame Fokusebene 523 haben. Die Brille 530 hat eine mit der Steuereinrichtung 537 verbundene Abstandsmesseinrichtung 549, die den Abstand E eines Betrachters 518 von der Anzeigefläche 504 erfasst. Die Steuereinrichtung 539 hat eine Funkschnittstelle 541. Über die Funkschnittstelle 541 wird der Steuereinrichtung 539 von der Anzeigeeinrichtung 502 eine Information über den in der Blickrichtung 535 des Betrachters 518 gemessenen Abstand C einer dreidimensionalen Struktur 542 von der Anzeigefläche 504 einer mittels der Projektionseinrichtungen 505, 507 auf die Anzeigefläche 504 projizierten dreidimensionalen Bildinformation zugeführt.

Die Steuereinrichtung 539 weist eine Rechnereinheit 547 auf. Die Rechnereinheit 547 enthält ein Computerprogramm, das die erforderliche Brechkraft und die notwendige prismatische Wirkung $P_{532}$, $P_{534}$ der Brillengläser 531, 533 bestimmt, damit der Betrachter 518 mit auf das Unendliche adaptierten Beobachteraugen 514, 516 und einer diesem Augenzustand entsprechenden Blickrichtung die mit der Anzeigeeinrichtung 502 visualisierte Bildinformation in einer an der Anzeigefläche 504 anliegenden Fokusebene 523 entspannt sehen kann.

Hierzu berechnet die Rechnereinheit aus dem Abstand E die für den Betrachter 118 individuell erforderliche Brechkraft und ermittelt die prismatische Wirkung der Brillengläser 531, 533 mittels der nachfolgenden Formelbeziehungen:

$$(22) \qquad P_{532} = 100 \frac{cm}{m} \frac{P_D}{2} \cdot \frac{1}{D}$$

$$(23) \qquad P_{534} = -100 \frac{cm}{m} \frac{P_D}{2} \cdot \frac{1}{D},$$

mit

$$(24) \qquad D := E - C.$$

Damit wird ermöglicht, dass ein Betrachter 518 mit einem linken und rechten Auge 514, 516 die an der Anzeigefläche 504 zur Anzeige gebrachte dreidimensionale Bildinformation mit einem linken und rechten Beobachtungsstrahlengang 520, 522 sehen kann, die einen gemeinsamen Schnittpunkt 540 mit dem Abstand C von der Anzeigefläche 504 aufweisen.

Mit den Brillengläsern 531, 533 der Brille 530 wird für den Betrachter 518 ein horizontalter Bildfeldwinkel ω ermöglicht, der ω = 120° beträgt. Hierzu ist die Brille 530 nach Art einer Sportbrille oder einer Schutzbrille mit einer horizontalen Basiskurve 543 gestaltet, für deren mittlere Krümmung κ gilt: κ ≥ 6 dpt.

Die Brille 530 hat Brillengläser 531, 533, welche die Augenhöhlen des Betrachters 518 abdecken. Mit dieser Maßnahme wird erreicht, das der Betrachter 518 die kuppelförmige Anzeigefläche 504 unter einem sehr weiten Bildfeldwinkel ω betrachten kann, der z.B. ω = 120° oder auch ω = 180° beträgt.

In dem System 500 ist die Optikbaugruppe 524 für das Trennen des Lichts von der ersten Gruppe von Anzeigezonen in dem linken Beobachtungsstrahlengang von dem Licht, das der rechte Beobachtungsstrahlengang von der zweiten Gruppe von Anzeigezonen erhält, in die Sehhilfe 530 integriert. Die Optikbaugruppe 524 ist hier mit einer auf

**EP 2 831 662 B1**

dem Brillenglas 531 angeordneten roten Filterfolie 535 und ein auf dem Brillenglas 533 positionierten grünen Filterfolie 537 aufgebaut.

Es sei bemerkt, dass in dem System 500 Bildinformation entsprechend dem System 100 aus Fig. 1 grundsätzlich auch mit polarisiertem Licht zur Anzeige gebracht werden kann. in diesem Fall enthält die Brille 530 keine Farbfilter, sondern Polarisationsfilter, um das Licht der Anzeigeeinrichtung 502 für den linken und rechten Beobachtungsstrahlengang 520, 522 zu trennen.

Zusammenfassend sind insbesondere folgende bevorzugte Merkmale der Erfindung festzuhalten: Die Erfindung betrifft ein System 100, 200 zum stereoskopischen Visualisieren von Bildinformation. Das System hat eine Anzeigeeinrichtung 102, 202, die eine Anzeigefläche 104, 204 für das Anzeigen von einem linken und rechten Teilbild 106, 108, 206, 208 aufweist. Die Anzeigeeinrichtung 102, 202 stellt das linke Teilbild 106, 206 einem auf die Anzeigefläche 104, 204 fokussierten linken Auge 114, 214 eines Betrachters 118, 218 in einer ersten Blickrichtung 114, 214 mit einem linken Beobachtungsstrahlengang 120, 220 bereit. Das rechte Teilbild 108, 208 wird in einer zweiten Blickrichtung 146, 246 einem auf die Anzeigefläche 104, 204 fokussierten rechten Auge 116, 216 des Betrachters 118, 218 mit einem rechten Beobachtungsstrahlengang 122, 222 zur Anzeige gebracht. Das System 100, 200 enthält eine von dem linken und/oder rechten Beobachtungsstrahlengang 120, 220, 122, 222 durchsetzte Sehhilfe 130, 230. Die Sehhilfe 100, 200 stellt für den linken und rechten Beobachtungsstrahlengang 120, 122, 220, 222 einen Strahlverlauf ein, bei dem ausgehend von dem linken und rechten Auge 114, 116, 214, 216 in der zu der Anzeigefläche 104, 204 weisenden Richtung 136, 236 der senkrechte Abstand (A) des in das Unendliche fortgesetzten linken Beobachtungsstrahlengangs 120, 220, 120', 220' von dem in das Unendliche fortgesetzten rechten Beobachtungsstrahlengang 122, 222 abnimmt. An einer mit einem Abstand C zu der Anzeigefläche 104, 204 angeordneten Stelle 140, 240 in dem in das Unendliche fortgesetzten linken und rechten Beobachtungsstrahlengang 120, 122 hat der Abstand A ein Minimum.

**Bezugszeichenliste:**

| | |
|---|---|
| 100, 200 | System |
| 102, 202 | Anzeigeeinrichtung |
| 104, 204, 304, 404 | Anzeigefläche |
| 106, 108, 206, 208 | Teilbild |
| 107, 109, 207, 209 | Gruppe |
| 110,112, 210, 212 | Bildpunkte |
| 111, 113, 211, 213 | Anzeigezone |
| 114, 116, 214, 216 | Auge, Betrachterauge |
| 115, 117 , 215, 216 | Augendrehpunkt |
| 118, 218 | Betrachter |
| 120, 120', 220, 220 | Beobachtungsstrahlengang |
| 122, 122", 222, 222' | Beobachtungsstrahlengang |
| 124, 224 | Optikbaugruppe |
| 124, 126 | Polarisationsfilter |
| 130, 230 | Sehhilfe |
| 132, 134, 232, 234 | Prisma |
| 136, 236 | Richtung |
| 137, 237 | Stelle |
| 140, 240 | Schnittpunkt, Struktur |
| 142, 242 | Struktur |
| 144, 146 | Blickrichtung |
| 202 | Anzeigeeinrichtung |
| 206 | Teilbild |
| 210, 212 | Bildpunkt |
| 224, 226, 228 | Shutter |
| 229 | Steuereinrichtung |
| 232, 234 | Prisma |
| 244, 246 | Blickrichtung |
| 300 | System |
| 314, 316 | Auge |
| 318 | Betrachter |
| 324 | Optikbaugruppe |

11

| | |
|---|---|
| 324 | Parallaxeblende |
| 400 | System |
| 402 | Anzeigeeinrichtung |
| 414, 416 | Auge |
| 418 | Betrachter |
| 420, 422 | Beobachtungsstrahlengang |
| 420', 422' | Beobachtungsstrahlengang |
| 424 | Optikbaugruppe, Prismenmatrix |
| 425, 427 | Winkelbereich |
| 430 | Sehhilfe |
| 432, 434 | Element |
| 435 | Steuereinrichtung |
| 437 | Rechnereinheit |
| 440 | Schnittpunkt |
| 442, 442' | Struktur |
| 500 | System |
| 502 | Anzeigeeinrichtung |
| 504 | Anzeigefläche |
| 505, 507 | Projektionseinrichtungen |
| 509 | Rotfilter |
| 511 | Grünfilter |
| 514, 516 | Auge |
| 515, 517 | Augendrehpunkt |
| 520, 522 | Beobachtungsstrahlengang |
| 523 | Fokusebene |
| 524 | Optikbaugruppe |
| 530 | Sehhilfe, Brille |
| 531, 533 | Brillengläser |
| 535 | Filterfolie |
| 536 | Richtung |
| 537 | Filterfolie |
| 539 | Steuereinrichtung |
| 541 | Funkschnittstelle |
| 543, 545 | Basiskurve |
| 547 | Rechnereinheit |
| 549 | Abstandsmesseinrichtung |

**Patentansprüche**

1. System (100, 200) zum stereoskopischen Visualisieren von Bildinformation,
   mit einer Anzeigeeinrichtung (102, 202), die eine Anzeigefläche (104, 204) für das Anzeigen von einem linken und rechten Teilbild (106, 108, 206, 208) aufweist,
   die das linke Teilbild (106, 206) einem auf die Anzeigefläche (104, 204) fokussierten linken Auge (114, 214) eines Betrachters (118, 218) in einer ersten Blickrichtung (144, 244) mit einem linken Beobachtungsstrahlengang (120, 220) bereitstellt und die das rechte Teilbild (108, 208) in einer zweiten Blickrichtung (146, 246) einem auf die Anzeigefläche (104, 204) fokussierten rechten Auge (116, 216) des Betrachters (118, 218) mit einem rechten Beobachtungsstrahlengang (122, 222) zur Anzeige bringt, und
   mit einer von dem linken und/oder rechten Beobachtungsstrahlengang (120, 220, 122, 222) durchsetzten Sehhilfe (130, 230),
   **dadurch gekennzeichnet, dass**
   die Sehhilfe für den linken und rechten Beobachtungsstrahlengang (120, 122, 220, 222) einen Strahlverlauf einstellt, bei dem ausgehend von dem linken und rechten Auge (114, 116, 214, 216) in der zu der Anzeigefläche (104, 204) weisenden Richtung (136, 236) der senkrechte Abstand (A) des in das Unendliche fortgesetzten linken Beobachtungsstrahlengangs (120, 220, 120', 220') von dem in das Unendliche fortgesetzten rechten Beobachtungsstrahlengang (122, 222) abnimmt und an einer Stelle (140, 240) ein Minimum aufweist, die einen endlichen Abstand (C) von der Anzeigefläche (104, 204) hat, wobei die erste Blickrichtung (144, 244) und die zweite Blickrichtung (146, 246) sich auf der Anzeigefläche (104, 204) schneiden, wobei

die Anzeigeeinrichtung (102, 202) dazu ausgebildet ist, das linke Teilbild (106, 206) mit einer ersten Gruppe (107, 207) von in der Anzeigefläche (104, 204) liegenden Anzeigezonen (111, 211) zu erzeugen sowie das rechte Teilbild (108, 208) mit einer zweiten Gruppe (109, 209) von in der Anzeigefläche (104, 204) liegenden Anzeigezonen (113, 213) zu generieren und dem linken und rechten Auge (114, 116, 214, 216) mit einem linken und rechten Beobachtungsstrahlengang (120, 120', 122, 122', 220, 220', 222, 222') zur Anzeige zu bringen, in dem eine Optikbaugruppe (124, 224) angeordnet ist, die das von der ersten Gruppe (107, 207) von Anzeigezonen (111, 211) herrührende Licht in dem linken Beobachtungsstrahlengang (120, 220) von dem Licht trennt, das der linke Beobachtungsstrahlengang (120, 220) von der zweiten Gruppe (109, 209) von Anzeigezonen (113, 213) erhält, um dem linken Auge (114, 214) das Licht aus der ersten Gruppe (107, 207) von Anzeigezonen (111, 211) zuzuführen, und die das Licht aus der zweiten Gruppe (109, 209) von Anzeigezonen (113, 213) in dem rechten Beobachtungsstrahlengang (116, 216) von dem Licht trennt, das der rechte Beobachtungsstrahlengang (116, 216) von der ersten Gruppe (107, 207) von Anzeigezonen (111, 211) erhält, um das Licht aus der zweiten Gruppe (109, 209) von Anzeigezonen (113, 213) zu dem rechten Auge (116, 216) zu leiten, und wobei die Anzeigezonen (111, 211) der ersten Gruppe (107, 207) mit den Anzeigezonen (113, 213) der zweiten Gruppe (109, 209) überlappen oder wobei eine jede Anzeigezone der ersten Gruppe (107, 207) zu wenigstens einer Anzeigezone der zweiten Gruppe (109, 209) benachbart angeordnet ist.

2.  System nach Anspruch 1, **dadurch gekennzeichnet, dass** der linke Beobachtungsstrahlengang (120, 120', 220, 220') mit dem rechten Beobachtungsstrahlengang (122, 122', 222, 222') einen gemeinsamen Schnittpunk (140, 240) hat.

3.  System nach Anspruch 1 oder 2, **dadurch gekennzeichnet, dass** die Anzeigeeinrichtung (102) das linke und rechte Teilbild (106, 108) mit unterschiedlich polarisiertem Licht erzeugt und die Optikbaugruppe (124) ein erstes Polarisationsfilter (126) enthält, mittels dessen das von der ersten Gruppe (107) von Anzeigezonen (111) herrührende Licht in dem linken Beobachtungsstrahlengang (120) von dem Licht trennt, das der linke Beobachtungsstrahlengang (120) von der zweiten Gruppe (109) von Anzeigezonen (113) erhält, und ein zweites Polarisationsfilter (128) aufweist, mittels dessen das von der zweiten Gruppe (109) von Anzeigezonen (113) herrührende Licht in dem rechten Beobachtungsstrahlengang (122) von dem Licht getrennt wird, das der rechte Beobachtungsstrahlengang (122) von der zweiten Gruppe (109) von Anzeigezonen (113) erhält; oder
    dass die Anzeigeeinrichtung (202) das linke und rechte Teilbild (206, 208) zeitsequentiell erzeugt und die Optikbaugruppe (224) einen ersten steuerbaren Shutter (226) enthält, der das dem linken Beobachtungsstrahlengang (220, 220') von der ersten Gruppe (207) von Anzeigezonen (211) zugeführte Licht von dem Licht trennt, das dem linken Beobachtungsstrahlengang (220, 220') von der zweiten Gruppe (209) von Anzeigezonen (213) zugeführt wird, und einen zweiten steuerbaren Shutter (228) aufweist, der das dem rechten Beobachtungsstrahlengang (222, 222') von der zweiten Gruppe (209) von Anzeigezonen (213) zugeführte Licht von dem Licht trennt, das dem rechten Beobachtungsstrahlengang (222, 222') von der ersten Gruppe (207) von Anzeigezonen (211) bereitgestellt wird; oder
    dass die Optikbaugruppe (324) für das Trennen des Lichts der ersten und zweiten Gruppe ausgewählter Anzeigezonen ein als Parallaxebarriere wirkendes Blendensystem enthält; oder
    dass die Optikbaugruppe für das Trennen des Lichts der ersten und zweiten Gruppe von Anzeigezonen eine Prismenmatrix (424) umfasst, die eine Vielzahl von in einer vertikalen Richtung sich erstreckender Prismenabschnitte aufweist, die jeweils einen der Anzeigefläche zugewandten linsenförmigen, insbesondere zylinderlinsenförmigen Bereich mit einer konvexen Oberfläche haben; oder
    dass die Anzeigeeinrichtung (502) das linke und rechte Teilbild (506, 508) mit Licht unterschiedlicher Farben erzeugt und die Optikbaugruppe (524) ein erstes Farbfilter (526) enthält, mittels dessen das von der ersten Gruppe von Anzeigezonen herrührende Licht in dem linken Beobachtungsstrahlengang (520) von dem Licht trennt, das der linke Beobachtungsstrahlengang (520) von der zweiten Gruppe von Anzeigezonen erhält, und ein zweites Farbfilter (528) aufweist, mittels dessen das von der zweiten Gruppe von Anzeigezonen herrührende Licht in dem rechten Beobachtungsstrahlengang (522) von dem Licht getrennt wird, das der rechte Beobachtungsstrahlengang (522) von der zweiten Gruppe von Anzeigezonen erhält.

4.  System nach Anspruch 1 oder 2, **dadurch gekennzeichnet, dass** die Optikbaugruppe (432, 434, 524) einstellbar ist und ein Variieren des Verlaufs des linken und rechten Beobachtungsstrahlengangs (420, 422, 520, 522) zwischen der Anzeigefläche (404, 504) und dem linken und rechten Auge (514, 516) ermöglicht.

5.  System nach einem der Ansprüche 1 bis 4, **dadurch gekennzeichnet, dass** die Sehhilfe (430) einstellbar ist und ein Variieren des Verlaufs des linken und rechten Beobachtungsstrahlengangs (420, 420', 422, 422') zwischen der Anzeigefläche (404) und dem linken und rechten Auge (414, 416) ermöglicht.

6. System nach Anspruch 5, **gekennzeichnet durch** eine mit der Sehhilfe (430) verbundene Steuereinrichtung (435) für das Einstellen des Abstands (C, C') der Stelle (440) in dem linken und rechten Beobachtungsstrahlengang (420, 422, 420', 422') von der Anzeigefläche (404), in welcher der senkrechte Abstand des in das Unendliche extrapolierten linken Beobachtungsstrahlengangs (420, 420') von dem in das Unendliche extrapolierten rechten Beobachtungsstrahlengang (422, 422') minimal ist, in Abhängigkeit der an der Anzeigeeinrichtung (402) zur Anzeige gebrachten Bildinformation.

7. System nach Anspruch 6, **dadurch gekennzeichnet, dass** die Steuereinrichtung (435) für den linken und rechten Beobachtungsstrahlengang (420, 422, 420', 422') eine prismatische Wirkung ($P_{232}$, $P_{234}$) der Sehhilfe (430) einstellt, die folgender Beziehung genügt:

$$P_{232} \approx 100\,\frac{\mathrm{cm}}{\mathrm{m}}\frac{P_D}{2}\left\{\frac{1}{D}-\frac{1}{E}\right\}, \qquad P_{234} \approx -100\,\frac{\mathrm{cm}}{\mathrm{m}}\frac{P_D}{2}\left\{\frac{1}{D}-\frac{1}{E}\right\},$$

wobei $P_D$ die Pupillendistanz der Augen des Betrachters, E der Abstand der Anzeigefläche (404) und D der Abstand einer mit der Anzeigeeinrichtung (402) zur Anzeige gebrachten dreidimensionalen Struktur von den Augen (414, 416) des Betrachters (418) ist.

8. System nach Anspruch 1 oder 2, **dadurch gekennzeichnet, dass** die Optikbaugruppe (524) in die Sehhilfe (530) integriert ist.

9. System nach einem der Ansprüche 1 bis 8, **gekennzeichnet durch** eine als Brille (530) ausgebildete Sehhilfe.

10. Verfahren zum Visualisieren von stereoskopischer Bildinformation, bei dem mit einer Anzeigeeinrichtung (104), die eine Anzeigefläche (102) für das Anzeigen von einem linken und rechten Teilbild (106, 108) aufweist, einem linken Auge (114) eines Betrachters (118) ein linkes Teilbild (106) in einer ersten Blickrichtung (144) mit einem linken Beobachtungsstrahlengang (120) bereitgestellt wird und bei dem einem rechten Auge (116) des Betrachters (118) ein rechtes Teilbild (108) in einer zweiten Blickrichtung (146) mit einem rechten Beobachtungsstrahlengang (122) zur Anzeige gebracht wird,
**gekennzeichnet durch**
das Einstellen eines Strahlverlaufs für den linken und rechten Beobachtungsstrahlengang (120, 122), bei dem ausgehend von dem linken und rechten Auge (114, 116) in der zu der Anzeigefläche (104) weisenden Richtung der senkrechte Abstand des in das Unendliche extrapolierten linken Beobachtungsstrahlengangs (120, 122) von dem in das Unendliche extrapolierten rechten Beobachtungsstrahlengang (120', 122') abnimmt und an einer Stelle (140) ein Minimum aufweist, die von der Anzeigefläche (104) einen endlichen Abstand (C) hat, wobei die erste Blickrichtung (144, 244) und die zweite Blickrichtung (146, 246) sich auf der Anzeigefläche (104, 204) schneiden, wobei die Anzeigeeinrichtung (102, 202) das linke Teilbild (106, 206) mit einer ersten Gruppe (107, 207) von in der Anzeigefläche (104, 204) liegenden Anzeigezonen (111, 211) erzeugt sowie das rechte Teilbild (108, 208) mit einer zweiten Gruppe (109, 209) von in der Anzeigefläche (104, 204) liegenden Anzeigezonen (113, 213) generiert und dem linken und rechten Auge (114, 116, 214, 216) mit einem linken und rechten Beobachtungsstrahlengang (120, 120', 122, 122', 220, 220', 222, 222') zur Anzeige bringt, in dem eine Optikbaugruppe (124, 224) angeordnet ist, die das von der ersten Gruppe (107, 207) von Anzeigezonen (111, 211) herrührende Licht in dem linken Beobachtungsstrahlengang (120, 220) von dem Licht trennt, das der linke Beobachtungsstrahlengang (120, 220) von der zweiten Gruppe (109, 209) von Anzeigezonen (113, 213) erhält, um dem linken Auge (114, 214) das Licht aus der ersten Gruppe (107, 207) von Anzeigezonen (111, 211) zuzuführen, und die das Licht aus der zweiten Gruppe (109, 209) von Anzeigezonen (113, 213) in dem rechten Beobachtungsstrahlengang (116, 216) von dem Licht trennt, das der rechte Beobachtungsstrahlengang (116, 216) von der ersten Gruppe (107, 207) von Anzeigezonen (111, 211) erhält, um das Licht aus der zweiten Gruppe (109, 209) von Anzeigezonen (113, 213) zu dem rechten Auge (116, 216) zu leiten, und wobei die Anzeigezonen (111, 211) der ersten Gruppe (107, 207) mit den Anzeigezonen (113, 213) der zweiten Gruppe (109, 209) überlappen oder wobei eine jede Anzeigezone der ersten Gruppe (107, 207) zu wenigstens einer Anzeigezone der zweiten Gruppe (109, 209) benachbart angeordnet ist.

**Claims**

1.  System (100, 200) for stereoscopic visualization of image information,
    having a display device (102, 202) having a display area (104, 204) for displaying a left and right partial image (106, 108, 206, 208),
    which display device provides the left partial image (106, 206) to a left eye (114, 214) of a viewer (118, 218) focused on the display area (104, 204) in a first viewing direction (144, 244) using a left observation beam path (120, 220), and displays the right partial image (108, 208) to a right eye (116, 216) of the viewer (118, 218) focused on the display area (104, 204) in a second viewing direction (146, 246) using a right observation beam path (122, 222), and having a vision aid (130, 230) through which the left and/or right observation beam path(s) (120, 220, 122, 222) travel(s),
    **characterized in that**
    the vision aid adjusts a beam course for the left and right observation beam paths (120, 122, 220, 222) in which, starting from the left and right eyes (114, 116, 214, 216) in the direction (136, 236) of the display area (104, 204), the perpendicular distance (A) of the left observation beam path (120, 220, 120', 220'), which is continued to infinity, from the right observation beam path (122, 222), which is continued to infinity, decreases and has a minimum at a location (140, 240) which is at a finite distance (C) from the display area (104, 204), wherein the first viewing direction (144, 244) and the second viewing direction (146, 246) intersect on the display area (104, 204), wherein the display device (102, 202) is embodied to generate the left partial image (106, 206) with a first group (107, 207) of display zones (111, 211) situated within the display area (104, 204) and the right partial image (108, 208) with a second group (109, 209) of display zones (113, 213) situated within the display area (104, 204) and to display them to the left and right eyes (114, 116, 214, 216) using a left and right observation beam path (120, 120', 122, 122', 220, 220', 222, 222') in which an optical assembly (124, 224) is arranged, which separates the light in the left observation beam path (120, 220) coming from the first group (107, 207) of display zones (111, 211) from the light the left observation beam path (120, 220) receives from the second group (109, 209) of display zones (113, 213) to feed the light from the first group (107, 207) of display zones (111, 211) to the left eye (114, 214), and which separates the light from the second group (109, 209) of display zones (113, 213) in the right observation beam path (116, 216) from the light the right observation beam path (116, 216) receives from the first group (107, 207) of display zones (111, 211) in order to guide the light from the second group (109, 209) of display zones (113, 213) to the right eye (116, 216), and wherein the display zones (111, 211) of the first group (107, 207) overlap with the display zones (113, 213) of the second group (109, 209) or wherein each display zone of the first group (107, 207) is arranged adjacent to at least one display zone of the second group (109, 209).

2.  System according to Claim 1, **characterized in that** the left observation beam path (120, 120', 220, 220') has a shared intersection (140, 240) with the right observation beam path (122, 122', 222, 222').

3.  System according to Claim 1 or 2, **characterized in that** the display device (102) generates the left and right partial images (106, 108) with differently polarized light, and the optical assembly (124) contains a first polarization filter (126), which is used to separate the light in the left observation beam path (120) coming from the first group (107) of display zones (111) from the light the left observation beam path (120) receives from the second group (109) of display zones (113), and has a second polarization filter (128), which is used to separate the light coming from the second group (109) of display zones (113) in the right observation beam path (122) from the light the right observation beam path (122) receives from the second group (109) of display zones (113); or
    **in that** the display device (202) generates the left and right partial images (206, 208) sequentially in time, and the optical assembly (224) contains a first controllable shutter (226) which separates the light fed to the left observation beam path (220, 220') from the first group (207) of display zones (211) from the light that is fed to the left observation beam path (220, 220') from the second group (209) of display zones (213), and has a second controllable shutter (228), which separates the light fed to the right observation beam path (222, 222') from the second group (209) of display zones (213) from the light that is provided to the right observation beam path (222, 222') by the first group (207) of display zones (211); or
    **in that** the optical assembly (324) contains a stop system acting as a parallax barrier for separating the light of the first and second groups of selected display zones; or
    **in that** the optical assembly comprises a prism matrix (424) for separating the light of the first and second groups of display zones, which prism matrix has a multiplicity of prism sections extending in a vertical direction which each have a lens-shaped, in particular cylindrical lens-shaped, region with a convex surface, which faces the display area; or

**in that** the display device (502) generates the left and right partial images (506, 508) with light of different colours and the optical assembly (524) contains a first colour filter (526) with which the light in the left observation beam path (520) coming from the first group of display zones is separated from the light the left observation beam path (520) receives from the second group of display zones, and has a second colour filter (528), with which the light in the right observation beam path (522) coming from the second group of display zones is separated from the light the right observation beam path (522) receives from the second group of display zones.

4.  System according to Claim 1 or 2, **characterized in that** the optical assembly (432, 434, 524) is adjustable and enables variation of the course of the left and right observation beam paths (420, 422, 520, 522) between the display area (404, 504) and the left and right eyes (514, 516) .

5.  System according to one of Claims 1 to 4, **characterized in that** the vision aid (430) is adjustable and enables a variation of the course of the left and right observation beam paths (420, 420', 422, 422') between the display area (404) and the left and right eyes (414, 416).

6.  System according to Claim 5, **characterized in that** a control device (435), connected to the vision aid (430), for adjusting the distance (C, C') of the location (440) in the left and right observation beam paths (420, 422, 420', 422') from the display area (404) in which the perpendicular distance of the left observation beam path (420, 420'), which is extrapolated to infinity, from the right observation beam path (422, 422'), which is extrapolated to infinity, is at a minimum, in dependence on the image information displayed on the display device (402) .

7.  System according to Claim 6, **characterized in that** the control device (435) adjusts a prismatic effect ($P_{232}$, $P_{234}$) of the vision aid (430) for the left and right observation beam paths (420, 422, 420', 422'), which satisfies the following relationship:

$$P_{232} \approx 100 \frac{cm}{m} \frac{P_D}{2} \left\{ \frac{1}{D} - \frac{1}{E} \right\}, \qquad P_{234} \approx -100 \frac{cm}{m} \frac{P_D}{2} \left\{ \frac{1}{D} - \frac{1}{E} \right\},$$

wherein $P_D$ is the pupillary distance between the eyes of the viewer, E is the distance from the display area (404) and D is the distance of a three-dimensional structure displayed using the display device (402) from the eyes (414, 416) of the viewer (418).

8.  System according to Claim 1 or 2, **characterized in that** the optical assembly (524) is integrated in the vision aid (530).

9.  System according to one of Claims 1 to 8, **characterized by** a vision aid configured as spectacles (530) .

10. Method for visualizing stereoscopic image information, in which a display device (104), having a display area (102) for displaying a left and right partial image (106, 108), is used to provide a left partial image (106) in a first viewing direction (144) to a left eye (114) of a viewer (118) using a left observation beam path (120), and in which a right partial image (108) is displayed in a second viewing direction (146) to a right eye (116) of the viewer (118) using a right observation beam path (122), **characterized by** the adjustment of a beam course for the left and right observation beam paths (120, 122,), in which, starting from the left and right eyes (114, 116) in the direction of the display area (104), the perpendicular distance of the left observation beam path (120, 122), which is extrapolated to infinity, from the right observation beam path (120', 122'), which is extrapolated to infinity, decreases and has a minimum at a location (140) which is at a finite distance (C) from the display area (104), wherein the first viewing direction (144, 244) and the second viewing direction (146, 246) intersect on the display area (104, 204), wherein the display device (102, 202) generates the left partial image (106, 206) with a first group (107, 207) of display zones (111, 211) situated within the display area (104, 204) and the right partial image (108, 208) with a second group (109, 209) of display zones (113, 213) situated within the display area (104, 204) and displays them to the left and right eyes (114, 116, 214, 216) using a left and right observation beam path (120, 120', 122, 122', 220, 220', 222, 222') in which an optical assembly (124, 224) is arranged which separates the light in the left observation beam path (120, 220) coming from the first group (107, 207) of display zones (111, 211) from the light the left observation beam path (120, 220) receives from the second group (109, 209) of display zones (113, 213) to feed the light from the first group (107, 207) of display zones (111, 211) to the left eye (114, 214), and which separates the light from the second group (109, 209) of display zones (113, 213) in the right observation beam path (116, 216) from the light the right observation beam path (116, 216) receives from the first group (107, 207) of display zones (111, 211) in order to guide the light from the second group (109, 209) of display zones (113, 213) to the right eye (116, 216), and wherein

the display zones (111, 211) of the first group (107, 207) overlap with the display zones (113, 213) of the second group (109, 209) or wherein each display zone of the first group (107, 207) is arranged adjacent to at least one display zone of the second group (109, 209).

## Revendications

1. Système (100, 200) de visualisation stéréoscopique d'informations d'image,
comprenant un dispositif d'affichage (102, 202), qui présente une surface d'affichage (104, 204) pour afficher une image partielle gauche et droite (106, 108, 206, 208),
qui fournit l'image partielle gauche (106, 206) à l'œil gauche (114, 214) d'un observateur (118, 218), focalisé sur la surface d'affichage (104, 204) dans une première direction du regard (144, 244) avec une trajectoire de faisceau d'observation gauche (120, 220), et qui affiche dans une deuxième direction du regard (146, 246) l'image partielle droite (108, 208) pour l'œil droit (116, 216) de l'observateur (118, 218), focalisé sur la surface d'affichage (104, 204), avec une trajectoire de faisceau d'observation droite (122, 222), et
comprenant une aide visuelle (130, 230) traversée par la trajectoire de faisceau d'observation gauche et/ou droite (120, 220, 122, 222),
**caractérisé en ce que**
l'aide visuelle ajuste pour la trajectoire de faisceau d'observation gauche et droite (120, 122, 220, 222) un tracé de faisceau dans lequel, en partant de l'œil gauche et de l'œil droit (114, 116, 214, 216) dans la direction (136, 236) orientée vers la surface d'affichage (104, 204), la distance verticale (A) de la trajectoire de faisceau d'observation gauche (120, 220, 120', 220') prolongée à l'infini par rapport à la trajectoire de faisceau d'observation droite (122, 222) prolongée à l'infini diminue, et présente un minimum à un endroit (140, 240) qui présente une distance finie (C) par rapport à la surface d'affichage (104, 204), la première direction du regard (144, 244) et la deuxième direction du regard (146, 246) s'intersectant sur la surface d'affichage (104, 204), dans lequel
le dispositif d'affichage (102, 202) est réalisé pour produire l'image partielle gauche (106, 206) avec un premier groupe (107, 207) de zones d'affichage (111, 211) situées dans la surface d'affichage (104, 204), et pour produire l'image partielle droite (108, 208) avec un deuxième groupe (109, 209) de zones d'affichage (113, 213) situées dans la surface d'affichage (104, 204), et pour les afficher pour l'œil gauche et l'œil droit (114, 116, 214, 216) avec une trajectoire de faisceau d'observation gauche et droite (120, 120', 122, 122', 220, 220', 222, 222') sur laquelle est disposé un ensemble optique (124, 224) qui sépare la lumière émanant du premier groupe (107, 207) de zones d'affichage (111, 211) sur la trajectoire de faisceau d'observation gauche (120, 220) de la lumière que reçoit la trajectoire de faisceau d'observation gauche (120, 220) du deuxième groupe (109, 209) de zones d'affichage (113, 213) afin d'amener à l'œil gauche (114, 214) la lumière provenant du premier groupe (107, 207) de zones d'affichage (111, 211), et qui sépare la lumière provenant du deuxième groupe (109, 209) de zones d'affichage (113, 213) sur la trajectoire de faisceau d'observation droite (116, 216) de la lumière que reçoit la trajectoire de faisceau d'observation droite (116, 216) du premier groupe (107, 207) de zones d'affichage (111, 211) afin de guider la lumière provenant du deuxième groupe (109, 209) de zones d'affichage (113, 213) jusqu'à l'œil droit (116, 216), et dans lequel les zones d'affichage (111, 211) du premier groupe (107, 207) se chevauchent avec les zones d'affichage (113, 213) du deuxième groupe (109, 209), ou dans lequel chaque zone d'affichage du premier groupe (107, 207) est disposée de manière adjacente à au moins une zone d'affichage du deuxième groupe (109, 209).

2. Système selon la revendication 1, **caractérisé en ce que** la trajectoire de faisceau d'observation gauche (120, 120', 220, 220') présente un point d'intersection commun (140, 240) avec la trajectoire de faisceau d'observation droite (122, 122', 222, 222').

3. Système selon la revendication 1 ou 2, **caractérisé en ce que** le dispositif d'affichage (102) produit l'image partielle gauche et droite (106, 108) avec une lumière polarisée différemment, et l'ensemble optique (124) comporte un premier filtre de polarisation (126) au moyen duquel la lumière émanant du premier groupe (107) de zones d'affichage (111) sur la trajectoire de faisceau d'observation gauche (120) est séparée de la lumière que reçoit la trajectoire de faisceau d'observation gauche (120) du deuxième groupe (109) de zones d'affichage (113), et présente un deuxième filtre de polarisation (128) au moyen duquel la lumière émanant du deuxième groupe (109) de zones d'affichage (113) sur la trajectoire de faisceau d'observation droite (122) est séparée de la lumière que reçoit la trajectoire de faisceau d'observation droite (122) du deuxième groupe (109) de zones d'affichage (113) ; ou
**en ce que** le dispositif d'affichage (202) produit l'image partielle gauche et droite (206, 208) de manière séquentielle dans le temps, et l'ensemble optique (224) comporte un premier obturateur (226) pouvant être commandé qui sépare la lumière amenée à la trajectoire de faisceau d'observation gauche (220, 220') par le premier groupe (207) de zones d'affichage (211) de la lumière qui est amenée à la trajectoire de faisceau d'observation gauche (220, 220') par le deuxième groupe (209) de zones d'affichage (213), et présente un deuxième obturateur (228) pouvant être commandé qui sépare la lumière amenée à la trajectoire de faisceau d'observation droite (222, 222') par le deuxième groupe (209) de zones d'affichage (213) de la lumière qui est fournie à la trajectoire de faisceau d'observation droite (222, 222') par le premier groupe (207) de zones d'affichage (211) ; ou

**en ce que** l'ensemble optique (324) comporte pour la séparation de la lumière du premier et du deuxième groupe de zones d'affichage sélectionnées un système de diaphragme agissant comme une barrière de parallaxe ; ou **en ce que** l'ensemble optique comprend pour la séparation de la lumière du premier et du deuxième groupe de zones d'affichage une matrice de prismes (424) qui présente une pluralité de parties de prisme s'étendant dans une direction verticale et qui présentent respectivement une zone en forme de lentille, en particulier en forme de lentille cylindrique, orientée vers la surface d'affichage et dotée d'une surface convexe ; ou

**en ce que** le dispositif d'affichage (502) produit l'image partielle gauche et droite (506, 508) avec une lumière de différentes couleurs, et l'ensemble optique (524) comporte un premier filtre de couleur (526) au moyen duquel la lumière émanant du premier groupe de zones d'affichage sur la trajectoire de faisceau d'observation gauche (520) est séparée de la lumière que reçoit la trajectoire de faisceau d'observation gauche (520) du deuxième groupe de zones d'affichage, et présente un deuxième filtre de couleur (528) au moyen duquel la lumière émanant du deuxième groupe de zones d'affichage sur la trajectoire de faisceau d'observation droite (522) est séparée de la lumière que reçoit la trajectoire de faisceau d'observation droite (522) du deuxième groupe de zones d'affichage.

4. Système selon la revendication 1 ou 2, **caractérisé en ce que** l'ensemble optique (432, 434, 524) est ajustable et permet de faire varier le tracé de la trajectoire de faisceau d'observation gauche et droite (420, 422, 520, 522) entre la surface d'affichage (404, 504) et l'œil gauche et l'œil droit (514, 516).

5. Système selon l'une quelconque des revendications 1 à 4, **caractérisé en ce que** l'aide visuelle (430) est ajustable et permet de faire varier le tracé de la trajectoire de faisceau d'observation gauche et droite (420, 420', 422, 422') entre la surface d'affichage (404) et l'œil gauche et l'œil droit (414, 416).

6. Système selon la revendication 5, **caractérisé par** un dispositif de commande (435) relié à l'aide visuelle (430) pour ajuster la distance (C, C') de l'endroit (440) sur la trajectoire de faisceau d'observation gauche et droite (420, 422, 420', 422') par rapport à la surface d'affichage (404) où la distance verticale de la trajectoire de faisceau d'observation gauche (420, 420') extrapolée à l'infini par rapport à la trajectoire de faisceau d'observation droite (422, 422') extrapolée à l'infini est minimale en fonction des informations d'image affichées sur le dispositif d'affichage (402).

7. Système selon la revendication 6, **caractérisé en ce que** le dispositif de commande (435) pour la trajectoire de faisceau d'observation gauche et droite (420, 422, 420', 422') ajuste un effet prismatique ($P_{232}$, $P_{234}$) de l'aide visuelle (430) qui satisfait à la relation suivante :

$$P_{232} \approx 100 \frac{cm}{m} \frac{P_D}{2} \left\{ \frac{1}{D} - \frac{1}{E} \right\}, \quad P_{234} \approx -100 \frac{cm}{m} \frac{P_D}{2} \left\{ \frac{1}{D} - \frac{1}{E} \right\}$$

où $P_D$ est la distance pupillaire des yeux de l'observateur, E est la distance de la surface d'affichage (404), et D est la distance d'une structure tridimensionnelle affichée par le dispositif d'affichage (402) par rapport aux yeux (414, 416) de l'observateur (418) .

8. Système selon la revendication 1 ou 2, **caractérisé en ce que** l'ensemble optique (524) est intégré dans l'aide visuelle (530).

9. Système selon l'une quelconque des revendications 1 à 8, **caractérisé par** une aide visuelle réalisée sous forme de lunettes (530).

10. Procédé de visualisation d'informations d'image stéréoscopiques, dans lequel un dispositif d'affichage (104), qui présente une surface d'affichage (102) pour afficher une image partielle gauche et droite (106, 108), fournit une image partielle gauche (106) à l'œil gauche (114) d'un observateur (118) dans une première direction du regard (144) avec une trajectoire de faisceau d'observation gauche (120), et dans lequel une image partielle droite (108) est affichée pour l'œil droit (116) de l'observateur (118) dans une deuxième direction du regard (146) avec une trajectoire de faisceau d'observation droite (122),

**caractérisé par**

l'ajustement d'un tracé de faisceau pour la trajectoire de faisceau d'observation gauche et droite (120, 122), dans lequel, en partant de l'œil gauche et de l'œil droit (114, 116) dans la direction orientée vers la surface d'affichage (104), la distance verticale de la trajectoire de faisceau d'observation gauche (120, 122) extrapolée à l'infini par rapport à la trajectoire de faisceau d'observation droite (120', 122') extrapolée à l'infini diminue et présente un minimum à un endroit (140) qui présente une distance finie (C) par rapport à la surface d'affichage (104),

la première direction du regard (144, 244) et la deuxième direction du regard (146, 246) s'intersectant sur la surface d'affichage (104, 204), dans lequel

le dispositif d'affichage (102, 202) produit l'image partielle gauche (106, 206) avec un premier groupe (107, 207) de zones d'affichage (111, 211) situées dans la surface d'affichage (104, 204), et produit l'image partielle droite (108, 208) avec un deuxième groupe (109, 209) de zones d'affichage (113, 213) situées dans la surface d'affichage (104, 204), et les affiche pour l'œil gauche et l'œil droit (114, 116, 214, 216) avec une trajectoire de faisceau d'observation gauche et droite (120, 120', 122, 122', 220, 220', 222, 222') sur laquelle est disposé un ensemble optique (124, 224) qui sépare la lumière émanant du premier groupe (107, 207) de zones d'affichage (111, 211) sur la trajectoire de faisceau d'observation gauche (120, 220) de la lumière que reçoit la trajectoire de faisceau d'observation gauche (120, 220) du deuxième groupe (109, 209) de zones d'affichage (113, 213) afin d'amener à l'œil gauche (114, 214) la lumière provenant du premier groupe (107, 207) de zones d'affichage (111, 211), et qui sépare la lumière provenant du deuxième groupe (109, 209) de zones d'affichage (113, 213) sur la trajectoire de faisceau d'observation droite (116, 216) de la lumière que reçoit la trajectoire de faisceau d'observation droite (116, 216) du premier groupe (107, 207) de zones d'affichage (111, 211) afin de guider la lumière du deuxième groupe (109, 209) de zones d'affichage (113, 213) jusqu'à l'œil droit (116, 216), et dans lequel

les zones d'affichage (111, 211) du premier groupe (107, 207) se chevauchent avec les zones d'affichage (113, 213) du deuxième groupe (109, 209), ou dans lequel chaque zone d'affichage du premier groupe (107, 207) est disposée de manière adjacente à au moins une zone d'affichage du deuxième groupe (109, 209).

Fig.1

Fig.2

Fig.4

Fig.3

Fig.5

EP 2 831 662 B1

Fig.6

EP 2 831 662 B1

Fig.7

EP 2 831 662 B1

**IN DER BESCHREIBUNG AUFGEFÜHRTE DOKUMENTE**

**In der Beschreibung aufgeführte Patentdokumente**

- EP 0362692 A2
- US 4744633 A
- DE 2742764 A1
- GB 2308677 A
- US 20060203338 A1
- US 7626674 B
- US 20070081126 A1

**In der Beschreibung aufgeführte Nicht-Patentliteratur**

- ABC der Optik. **WERNER DAUSIEN.** Mütze. Verlag, 1960, 135-138
- ABC der Optik. **WERNER DAUSIEN.** Mütze. Verlag, 1960, 137